# EUROPEAN PATENT APPLICATION

(11) **EP 0 989 046 A1**
(43) Date of publication of application: **29.03.2000**
(21) Application number: 99117234.7
(22) Date of filing: 02.09.1999
(51) Int. Cl.: B62D 5/04

(54) **Torque sensor and steering apparatus**

(30) Priority: 11.09.1998 JP 25900298; 15.10.1998 JP 29415498
(71) Applicant: Koyo Seiko Co., Ltd., Osaka-shi, Osaka 542-0081 (JP)
(72) Inventor: Tokumoto, Yoshitomo, c/o Koyo Seiko Co., Ltd., Osaka-shi, Osaka 542-0081 (JP)
(74) Representative: Selting, Günther

(57) **Abstract**

The invention provides a torque sensor and steering apparatus using thereof, which makes it possible to easily assemble mechanical parts, adjust a neutral point and gain for measured signal, without need for any magnetic material, and consequently to provide better yield for the product. A third bevel gear (13c) is allowed to engage both of a first bevel gear (13a) attached to an input shaft (5) and a second bevel gear (13b) attached to an output shaft (8), and a slider (13f) is allowed to slide along the shaft direction by movement of a cam (13e) which integrally rotates with the third bevel gear (13c). The amount of movement of a swinging arm (13j) which is connected to the slider (13f) is detected by a potentiometer (13k) so that an electric signal corresponding to a torque applied to the input shaft is generated. The electric signal and a predetermined electric signal which is to be outputted in accordance with a measured torque are preliminarily stored in an EPROM in association with each other; thus, an electric signal corresponding to the generated electric signal is read from the EPROM and outputted.

## Description

### BACKGROUND OF THE INVENTION

The present invention relates to a torque sensor for measuring a steering torque being applied to, for example, a steering wheel, and a steering apparatus for driving an electric motor based upon the results of measurements of the torque sensor so as to generate a steering assist force.

Steering apparatuses for automobiles include those which assist steering by driving an electric motor so as to reduce burden on the driver (so-called power steering apparatuses).

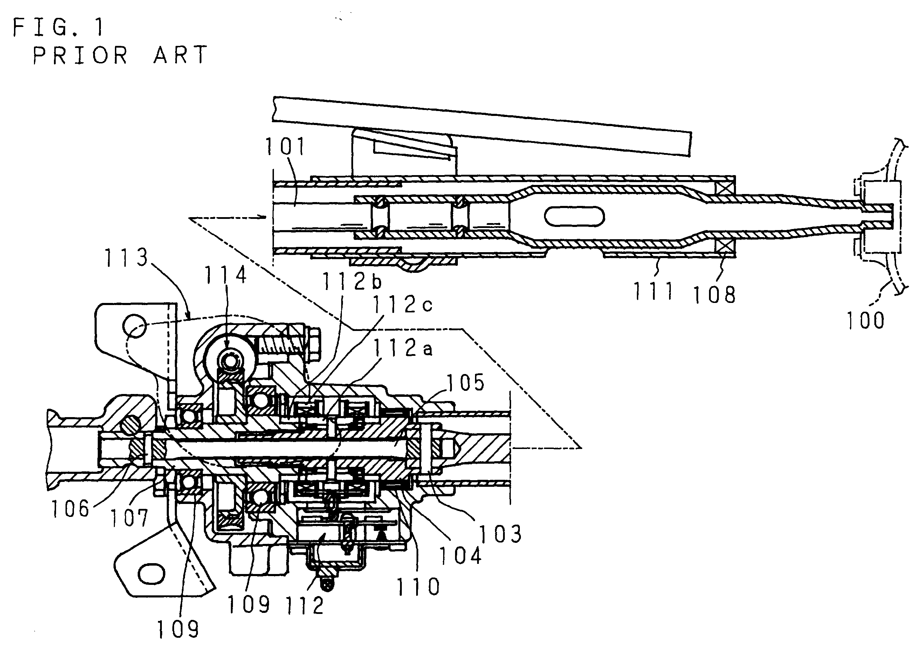

FIG. 1 is a longitudinal cross-sectional view showing the construction of a conventional steering apparatus. In FIG. 1, reference numeral 101 is an upper portion shaft having its upper end portion (on the right in FIG. 1) to which a steering wheel 100 is attached. To the lower end portion of the upper portion shaft 101 are connected the upper end portion of a cylindrical input shaft 104 and the upper end portion of a connecting shaft (torsion bar) 105 that is inserted inside thereof through a first dowel pin 103, and to the lower end portion of the connecting shaft 105 is connected a cylindrical output shaft 107 through a second dowel pin 106. Moreover, the upper end portion of the output shaft 107 is inserted into the lower end portion of the input shaft 104, and the upper portion shaft 101 and output shaft 107 are supported inside a housing 111 through ball bearings 108 and 109, and the input shaft 104 is also supported inside thereof through a needle bearing 110.

Inside this housing 111 are installed a torque sensor 112 for measuring a steering torque based upon a relative displacement of the input shaft 104 and output shaft 107 that are connected together with the connecting shaft 105, and a reduction mechanism 114 for reducing the rotation of a steering-assist electric motor 113 that is driven based on the measurements of the torque sensor 112 so as to transmit it to the output shaft 107. Thus, the operation of a steering mechanism is assisted by the rotation of the electric motor 113 corresponding to the rotation of the steering wheel 100 so as to reduce burden imposed on the driver. Moreover, the lower end portion of the output shaft 107 is connected to the rack-pinion-type steering mechanism (not shown) trough a universal joint.

For example, a noncontact sensor disclosed by Japanese Patent Application Examined No.021433 (1995) is used as the above-mentioned torque sensor 112. In this torque sensor 112, magnetic rings 112a and 112b, which are respectively secured to the input shaft 104 and output shaft 107, are placed inside a torque detection coil 112c that is secured around the connecting shaft 105 inside the housing 111. A plurality of rectangular teeth sections are formed along the whole circumference of each of the opposing end faces of the magnetic rings 112a and 112b respectively with the same pitches. When the magnetic ring 112a on the input shaft 104 side and the magnetic ring 112b on the output shaft 107 are allowed to rotate relatively in response to a torsion of the connecting shaft 105, the opposing areas of the teeth sections are changed, resulting in a change in the impedance of the torque detection coil 112c. Thus, the steering torque is measured based upon an electric signal obtained from this change in the impedance.

Moreover, besides the above-mentioned torque sensor, the following torque sensor is, for example, suggested in which a helix angle occurring in the connecting shaft 105 connecting the input shaft 104 and output shaft 107 is converted into a positional change by using a combination of a plurality of gears and cams so that a steering torque being applied to the steering wheel 100 is measured by an electric signal in response to the converted positional change.

However, in these conventional torque sensors, it is necessary to conduct a neutral point (steering-torque neutral point) adjustment and gain adjustment on the electric signal serving as a measured signal during their manufacturing process, and since there are individual differences in the linearity of the above-mentioned electric signal, it is also necessary to strictly manage the precision and assembling dimension of the respective mechanical parts.

In particular, a steering-torque neutral point adjustment is conducted to obtain a predetermined output from the former torque sensor 112 while no steering torque is applied to the steering wheel 100. This adjustment is done prior to making a connection between the connecting shaft 105 and output shaft 107 via a second dowel pin 106. More specifically, the upper portion shaft 101, input shaft 104, output shaft 107, torque sensor 112, and reduction mechanism 114 are placed inside the housing 111, and then the upper end of the upper portion shaft 101, which is protruded from the upper end of the housing 111, is held and moved in the axial and rotational direction so that the magnetic ring 112a on the input shaft 104 side and the magnetic ring 112b on the output shaft 107 side are adjusted in their opposing areas of the teeth sections and their gap between the teeth sections; thus, the steering-torque neutral point adjustment of the torque sensor 112 is made.

After the adjustment, a through hole for the second dowel pin 106 is machined in the lower end portions of the connecting shaft 105 and output shaft 107, and then the second dowel pin 106 is inserted into the through hole so that the connecting shaft 105 and output shaft 107 are connected together, thereby the adjusted state for the neutral point is maintained.

However, in order to adjust the opposing areas of the teeth sections and the gap between the teeth sections of the two magnetic rings 112a and 112b during the adjustment of the neutral point in the former torque sensor 112, it is necessary to find out an optimal position in three-dimensional space for the point.

Moreover, it is difficult to control qualities and characteristics requiring for the magnetic material used in the torque sensor 112.

### BRIEF SUMMARY OF THE INVENTION

The present invention has been devised to solve the above-mentioned problems and its one of objectives is to provide a torque sensor which enables an easy adjustment for the steering-torque neutral point and a steering apparatus having such a torque sensor.

Another objective of the present invention is to provide a torque sensor which does not need a magnetic material requiring strict quality and characteristic control in its mechanical parts and which indicates a substantially linear output characteristic in response to an input torque, and a steering apparatus having such a torque sensor.

The torque sensor of the present invention, which measures an applied torque on an input shaft based on a helix angle which has been induced in a connecting shaft coaxially connecting the input shaft and an output shaft, is provided with: a first gear and a second gear which are respectively attached to the input and output shafts; a third gear which engages with both the first and second gears, and a detector for detecting the amount of rotation of the third gear, wherein the torque is measured based upon the amount of rotation detected by the detector.

In this torque sensor, when a torque is applied to the input shaft causing a torsion in the connecting shaft, a relative angular displacement occurs between the input and output shafts. Consequently, the third gear, which engages with both the first gear on the input shaft side and the second gear on the output shaft side, is allowed to rotate in accordance with the relative angular displacement. Therefore, by detecting the amount of rotation of the third gear by using the detector, it is possible to measure the torque which corresponds to the amount of rotation.

Moreover, in the steering-torque neutral point adjustment, it is only necessary to adjust the rotational position of the third gear and the output value of the detector while no torque is being applied to the input shaft; therefore, it becomes possible to make the neutral point adjustment easier as compared with conventional adjustment.

Furthermore, since the mechanical section does not require any magnetic materials in its construction, it is possible to provide easier quality and characteristic control.

Another torque sensor of the present invention is characterized in that the detector is provided with an eccentric member which is provided on the rotational axis of the third gear, a moving member which moves along the shaft direction of the input and output shafts corresponding to the rotation of the eccentric member accompanied by the rotation of the third gear, and a generator which generates an electric signal corresponding to the amount of movement of the moving member.

The third gear rotates on its rotational axis (autorotates) and also rolls (revolves) centered on the input and output shafts; thus, in order to directly detect the amount of rotation, a device, for directly detecting the amount of rotation, has to be revolved centered on the axial centers of the input and output shafts together with the third gear, resulting in a difficulty in carrying out the detection. Therefore, with respect to the rotational movement of the third gear, shaft direction components of the input and output shafts are converted to movements of the moving member by using the eccentric member, and the amount of rotation of the third gear is indirectly detected by determining the converted amount of movement of the moving member.

Therefore, the amount of rotation of the third gear, which is difficult to detect directly, is converted to an amount of movement of the moving member by using the eccentric member, while the moving member which is allowed to move in cooperation with the third gear; thus, it is possible to easily carry out the torque measurement based upon the electric signal which is generated by the generator in response to the amount of movement.

Here, since quite a small amount of rotation of the third gear can be amplified to a large amount of movement of the moving member which is depending on the dimension of the eccentric member, it is possible to carry out the torque measurements with high precision.

Still another torque sensor of the present invention is characterized in that the detector is provided with an eccentric member which is eccentrically provided on the rotational axis of the third gear, a moving member which moves along the shaft direction of the input and output shafts corresponding to the rotation of the eccentric member accompanied by the rotation of the third gear, a swinging member which swings in cooperation with movement of the moving member, and a generator which generates an electric signal corresponding to the amount of swinging movement of the swinging member.

When the components of the rotational movements of the third gear in the axial direction of the input and output shafts are converted to the movement of the moving member by using the eccentric member, where the movements of the eccentric member, caused by the rolling (revolving) of the third gear centered on the input and output shafts, is absorbed. Therefore, the movements of the moving member are converted to the swinging movements of the swinging member, with the swinging member being kept so as not to carry out the revolving; consequently, it is possible to indirectly detect the amount of rotation of the third gear by detecting the amount of swinging movement.

Therefore, the amount of rotation of the third gear, which is difficult to directly detect, is converted to the amount of swinging movement of the swinging member by using the eccentric member, the moving member and swinging member which operate in cooperation with the third gear; thus, it becomes possible to easily carry out torque measurements based upon an electric, signal which is generated by the generator in response to the amount of swinging movement.

Here, since quite a small amount of rotation of the third gear can be amplified to a large amount of swinging movement of the swinging member depending on the dimensions of the eccentric member and swinging member, it becomes possible to carry out torque measurements with high precision.

Still another torque sensor of the present invention is characterized in that the aforementioned first gear is provided movably along the input shaft and characterized by further comprising a spring for pressing the first gear toward the second gear.

By pressing the first gear toward the second gear, pressures are applied to the meshed portion of the first and third gears and also to the meshed portion of the second and third gears so that it becomes possible to reduce backlash between those gears.

Still another torque sensor of the present invention is characterized in that a plurality of third gears are provided along the circumferential direction of the first and second gears.

When only a third gear has been provided, the first and second gears tend to tilt around the portions engaging the third gear serving as fulcrums. For this reason, this application of a plurality of third gears makes it possible to disperse forces applied to the facing direction of the first and second gears by using the third gears, and consequently to prevent the first and second gears from tilting at least to the facing direction of the first and second gears.

Still another torque sensor of the present invention is characterized in that the eccentric member has a shape elongated in the radial direction of the third gear with its one portion contacting with the moving member, and in that a cross-sectional shape of the contacting portion in the plane orthogonal to the rotational axis of the third gear is a portion of ellipse which lies with its major axis oriented in the lengthwise direction.

Since the rotational axis of the third gear is always orthogonal to the rotational axes of the input and output shafts, the component of rotational movement of the third gear exerted in the input and output shaft direction exhibit a single oscillation. For this reason, in the case when the cross-sectional shape of the contact portion in the plane orthogonal to the rotational axis of the third gear forms, for example, a portion of circle, since the distance from the rotational center of the eccentric member to the contact point of the eccentric member, and from the rotational center to the contact point of the moving member do not vary much depending on the position of the contact point, it is possible to allow the moving member to move in virtually a single oscillating fashion. Moreover, as the relationship between the movement of the moving member and the rotation of the third gear becomes closer to the proportional relationship, the amount of rotation of the third gear can be accurately detected more easily. In other words, as the contact portion of the eccentric member and the moving member becomes closer to the top of eccentric member, the shape of eccentric member is preferably set so as to make the amount of the movement of the moving member larger. Moreover, as the above-mentioned contact portion becomes closer to the top of eccentric member, the shape of eccentric member is also preferably set so as to make the distance from the contact portion and rotational center of the eccentric member larger.

Therefore, the cross-sectional shape of the contact portion in the plane orthogonal to the rotational axis of the third gear is set so as to form a portion of ellipse which lies with its major axis oriented in the lengthwise direction of the eccentric member; thus, as the contact portion comes closer to the top of eccentric member, the distance from the rotational center becomes larger, with the result that as the contact portion between the eccentric member and moving member becomes closer to the top of eccentric member, the movement of moving member is made larger so that the relationship between the rotation of third gear and the movement of the moving member is made closer to a proportional relationship.

Still another torque sensor of the present invention is characterized by including a memory for correspondingly storing an electric signal generated by the generator and a predetermined electric signal to be outputted in accordance with the torque, and an output device for reading and outputting a signal, which is corresponding to the electric signal generated by the generator, from the memory.

The memory stores the electric signal corresponding to the amount of movement of the moving member and the predetermined electric signal to be outputted in accordance with a torque in association with each other, and the output device outputs an electric signal corresponding to the generated electric signal based upon the electric signal generated by the generator and the contents stored in the memory. Thus, it becomes possible to easily carry out an assembling process for mechanical parts, a neutral point adjustment for the measured signal and a gain adjustment for the measured signal, and consequently to provide better yield for the product. Moreover, it becomes possible to reduce variations in individual characteristics, and consequently to provide an easier adjustment even in the case when a replacement of the sensor is made due to a malfunction.

Another objective of the present invention is to provide a torque sensor which makes it possible to easily carry out an assembling process for mechanical parts, a neutral point adjustment for the measured signal and a gain adjustment for the measured signal, and consequently to provide better yield for the product, and a steering apparatus having such a torque sensor.

The torque sensor of the present invention, which generates an electric signal corresponding to a measured torque, is provided with a memory for correspondingly storing the electric signal and a predetermined electric signal which is to be outputted based on the torque, and an output device for reading and outputting an electric signal, which is corresponding to the electric signal in accordance with the torque, from the memory.

The memory stores the electric signal corresponding to the measured torque and the predetermined electric signal to be outputted in accordance with the measured torque in association with each other. Moreover, the output device reads an electric signal corresponding to the electric signal in accordance with the measured torque out from the memory and outputs it. With this arrangement, it becomes possible to easily carry out an assembling process for mechanical parts, a neutral point adjustment for the measured signal and a gain adjustment for the measured signal, and consequently to provide better yield for the product. Moreover, it becomes possible to reduce variations in individual characteristics, and consequently to provide an easier adjustment even in the case when a replacement of the sensor is made due to a malfunction.

Moreover, a steering apparatus of the present invention, for assisting steering based upon a steering torque being applied to a steering wheel, is characterized by including: an input shaft connected to the steering wheel; an output shaft coaxially provided with the input shaft; a connecting shaft for connecting the input output shafts; any one of the torque sensors in accordance with the above-mentioned inventions, the first and second gears thereof being attached to the input and output shafts respectively; and an electric motor for steering assistance which is driven based on a steering torque measured by the torque sensor.

With this steering apparatus, it becomes possible to make easier the steering-torque neutral point adjustment as compared with conventional apparatuses, and since no magnetic material is used in the construction of the mechanical sections, it is possible to provide easier quality control and characteristic control. Moreover, it is possible to easily carry out the gain adjustment for the measured signal of the torque sensor and also to provide an easier adjustment even in the case when a replacement of the sensor is made due to a malfunction.

The above and further objects and features of the invention will more fully be apparent from the following detailed description with accompanying drawings.

### BRIEF DESCRIPTION OF THE SEVERAL VIEWS OF THE DRAWINGS

FIG. 1 is a longitudinal cross-sectional view showing the construction of a conventional steering apparatus;
FIG. 2 is a longitudinal cross-sectional view showing the construction of an essential part of a steering apparatus according to embodiment 1 of the present invention;
FIG. 3 is a lateral cross-sectional view taken along line II-II of FIG. 2;
FIG. 4 is a cross-sectional view taken along line III-III of FIG. 2;
FIG. 5 is an explanatory drawing showing the operation of the steering apparatus according to embodiment 1 of the present invention;
FIG. 6 is a cross-sectional view taken along line V-V of FIG. 5, which shows a principle of embodiment 1;
FIG. 7 is an explanatory drawing showing the operation of a steering apparatus according to embodiment 2 of the present invention;
FIG. 8 is a cross-sectional view taken along line VII-VII of FIG. 7, which shows a principle of embodiment 2;
FIG. 9 is an explanatory drawing showing the operation of a steering apparatus according to embodiment 3 of the present invention;
FIG. 10 is a block diagram showing a structural example of an electric circuit mounted on the substrate of the torque sensor shown in FIG. 9;
FIGS. 11A and 11B are graphs showing input-output characteristics of the torque sensor shown in FIG. 10; and
FIGS. 12A to 12C are graphs showing input-output characteristics of the torque sensor used in a steering apparatus according to embodiment 4 of the present invention.

### DETAILED DESCRIPTION OF THE INVENTION

Referring to Figures, the following description will discuss embodiments of the present invention in detail.

### Embodiment 1

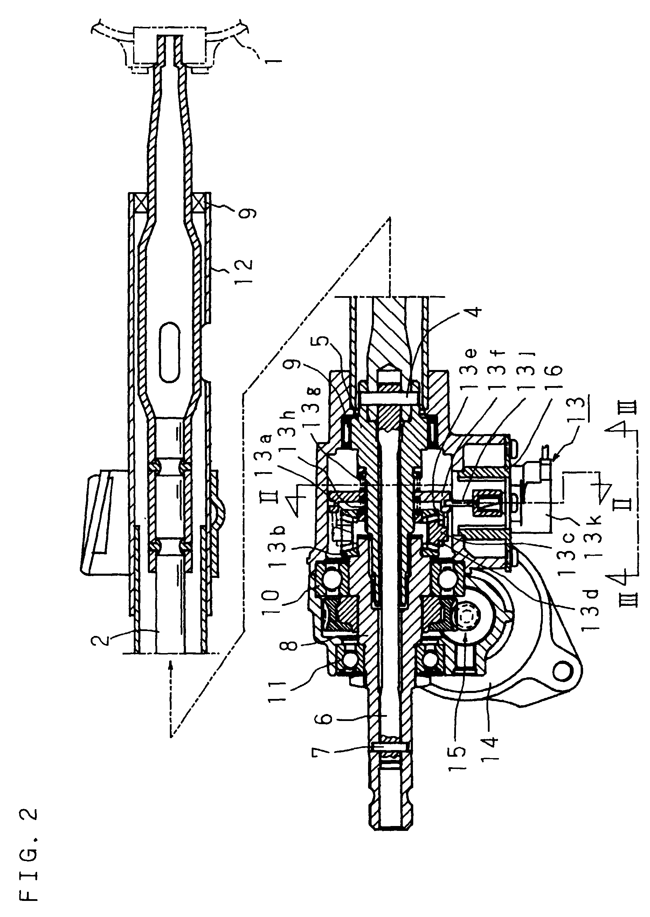

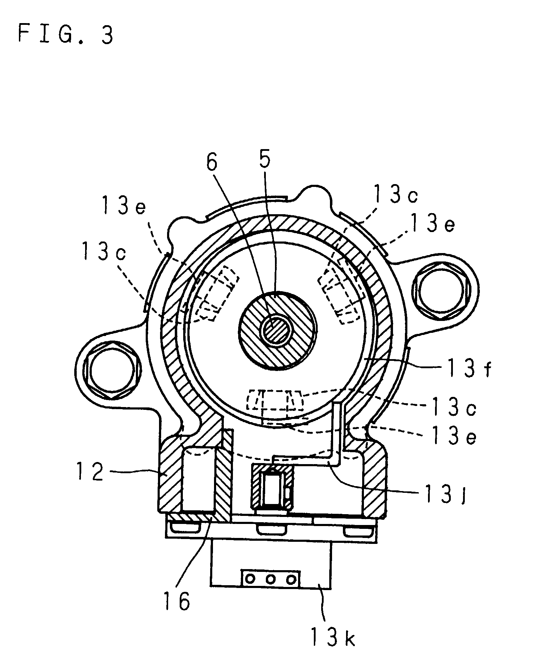

FIG. 2 is a longitudinal cross-sectional view showing the construction of an essential part of a steering apparatus according to embodiment 1 of the present invention, and FIG. 3 is a lateral cross-sectional view taken along line II-II of FIG. 2.

In FIGS. 2 and 3, reference numeral 2 is an upper portion shaft having its upper end portion to which a steering wheel 1 is attached. To the lower end portion of the upper portion shaft 2 are connected the upper end portion of a cylindrical input shaft 5 and the upper end portion of a connecting shaft (torsion bar) 6 that is inserted inside thereof through a first dowel pin 4, and to the lower end portion of the connecting shaft 6 is connected a cylindrical output shaft 8 through a second dowel pin 7; thus, the upper portion shaft 2, input shaft 5, and output shaft 8 are rotatably supported inside a housing 12 through bearings 9, 10, and 11.

Inside the housing 12 are installed a torque sensor 13 for measuring a steering torque based upon a relative displacement of the input shaft 5 and output shaft 8 that are connected together with the connecting shaft 6, and a reduction mechanism 15 for reducing the rotation of a steering-assist electric motor 14 that is driven based on the measurements of the torque sensor 13 so as to transmit it to the output shaft 8. Thus, the operation of a steering mechanism is assisted by the rotation of the electric motor 14 corresponding to the rotation of the steering wheel 1 so as to reduce burden imposed on the driver in steering. Moreover, the lower end portion of the output shaft 8 is connected rack-pinion-type the steering mechanism (not shown) through a universal joint.

The torque sensor 13 has a construction as described below. A first bevel gear 13a is attached on the input shaft 5 movably along the shaft direction, and a second bevel gear 13b is secured on the output shaft 8. The first and second bevel gears 13a and 13b are placed apart with an appropriate distance with their teeth facing each other. Three third bevel gears 13c are engaged with the first and second bevel gears 13a and 13b with intervals of 120 degrees in the circumferential direction of the gears 13a and 13b. The three bevel gears 13c are allowed to rotate in a rolling manner (revolve) around the connecting shaft 6 by a ring-shaped retainer 13d, and also allowed to rotate on its rotational axis (autorotate) while being held rotatably by the rotational axis cantilevered outwardly in the radial direction of the rolling (see FIG. 3).

A long-plate-shaped cam 13e, which is arranged along one direction with its both end positions formed in arc faces, is attached to each rotational shaft of the third bevel gears 13c on the outer side of the retained position of the retainer 13d with its one end portion positioned at the center of rotation. On the upper side of the cams 13e, an annulus-shaped slider 13f is loose-fitted onto the input shaft 5.

The slider 13f is pressed on its upper end face by a first coil spring 13g that is interpolated between it and a spring base faced with the slider 13f inside the housing 12 so that the lower end face thereof is always pressed onto the three cams 13e. Moreover, an annular groove is formed on the outer circumference of the slider 13f, and one end portion of an arm 13j having a virtually L-letter shape for frontal view (or for rear view) in FIG. 3 is engaged in the groove. A cylindrical connecting section is formed on the other end portion of the arm 13j, and the connecting section is fitted onto an input shaft 13r of a potentiometer 13k secured to the housing 12; thus the arm 13j is connected to the input shaft 13r so as to form a crank-like shape as a whole.

Here, in order to convert the amount of rotation of the third bevel gear 13c to a greater amount of swinging movement of the arm 13j so as to conduct high precision torque measurements, it is preferable to determine the effective length of the cam 13e longer than that of the arm 13j. Moreover, in order to reduce backlash among the first, second, and third bevel gears 13a, 13b, and 13c, and also in order to allow the slider 13f to always move in parallel with the axis of the input shaft 5, a second coil spring 13h is placed between the first bevel gear 13a and slider 13f.

Moreover, an opening is formed in one portion of the housing 12 in the vicinity of the slider 13f, and a potentiometer receiver 16 having a rectangular plate shape is fixed on the housing 12 with its four corners being fastened with screws so as to cover-up the opening.

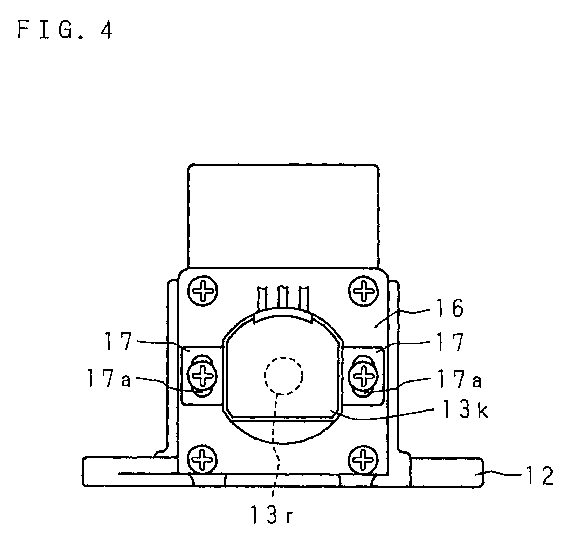

FIG. 4 is a cross-sectional view taken along line III-III in FIG. 2. The potentiometer 13k has two plate-shaped mounting flanges 17 protruding to both sides form one face thereof in parallel with the face, and the input shaft 13r is protruding from the center of the face. An opening is formed in the center of the potentiometer receiver 16. The potentiometer 13k is placed on the potentiometer receiver 16 so that the input shaft 13r is inserted into the opening and so that the two mounting flanges 17 are respectively faced along in a direction virtually orthogonal to the input shaft 5, and fastened to the potentiometer receiver 16 with screws through an elongated hole 17a formed in each of the mounting flanges 17 with its lengthwise direction coinciding with the direction of the input shaft 5. Thus, the potentiometer 13k can be secured thereto inclined around the input shaft 13r with play of the elongated hole 17a.

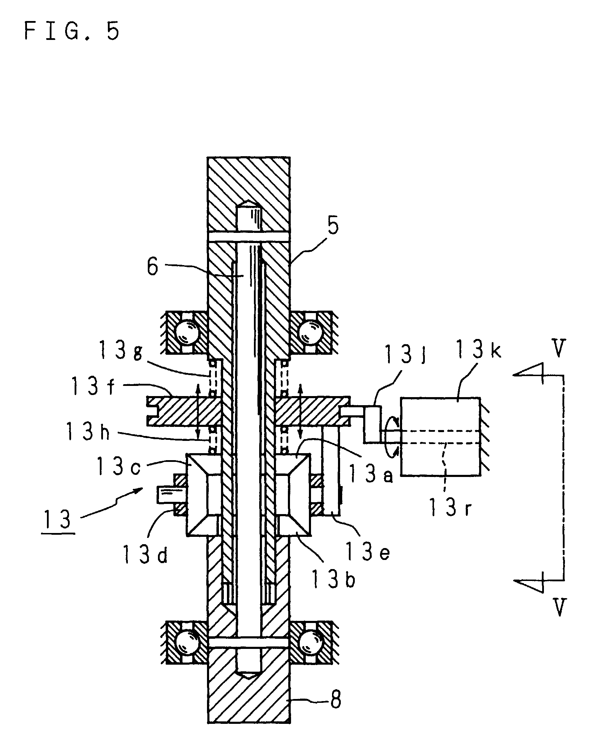

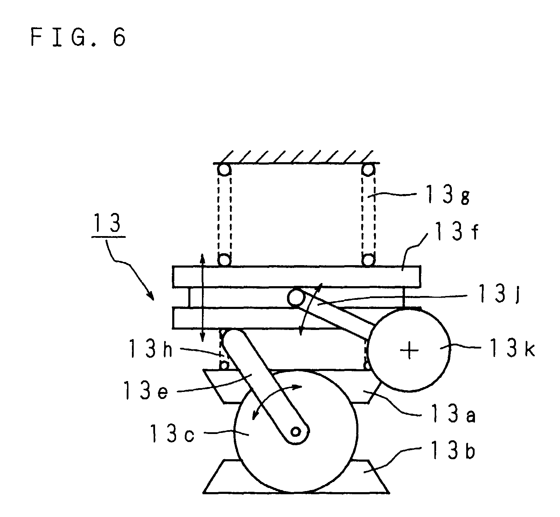

FIG. 5 is an explanatory drawing showing the operation of the steering apparatus according to embodiment 1 the present invention, and FIG. 6 is a cross-sectional view taken along line V-V of FIG. 5, which shows a principle thereof. In the case when the input shaft 5 and output shaft 8 relatively rotate without twisting the connecting shaft 6, since there is no difference in rotational position between the first and second bevel gears 13a and 13b, the third bevel gear 13c is not allowed to rotate, with the result that the input shaft 5, output shaft 8, and connecting shaft 6 are allowed to rotate integrally.

In contrast, when the input shaft 5 and output shaft 8 relatively rotate with a torsion induced in the connecting shaft 6, a difference in rotational position occurs between the first and second bevel gears 13a and 13b. For this reason, the third bevel gear 13c rotates on its axis by an amount corresponding to the torsion in the connecting shaft 6 so that it is allowed to revolve around the connecting shaft 6 together with the retainer 13d. At this time, together with the third bevel gear 13c, the cam 13e secured to the rotational shaft thereof is also allowed to rotate, with the result that the slider 13f is allowed to slide in accordance with its amount of rotation. Then, the amount of swinging movement of the arm 13j inserted to the annular groove of the slider 13f is inputted to the potentiometer 13k, thereby making it possible to measure a steering torque.

In the above-mentioned construction, the adjustment for the steering-torque neutral point is first carried out by attaching the cam 13e so as to have a predetermined incline while no steering torque is applied to the steering wheel 1. Next, the potentiometer 13k is fine-adjusted in its mounting angle by using the elongated holes 17a on the mounting flanges 17 so as to allow the output of the potentiometer 13k to attain a predetermined target value, and then fastened with the screws. Therefore, no complex task is necessary for the above-mentioned adjustment.

Moreover, since magnetic materials, which require troublesome control in qualities and characteristics, are not used in the torque sensor 13, it makes handling and assembling of the sensor a lot easier.

Here, with respect to the potentiometer 13k, either those of a contact or non-contact type may be applied, and the number of the third bevel gears 13c is not particularly limited.

### Embodiment 2

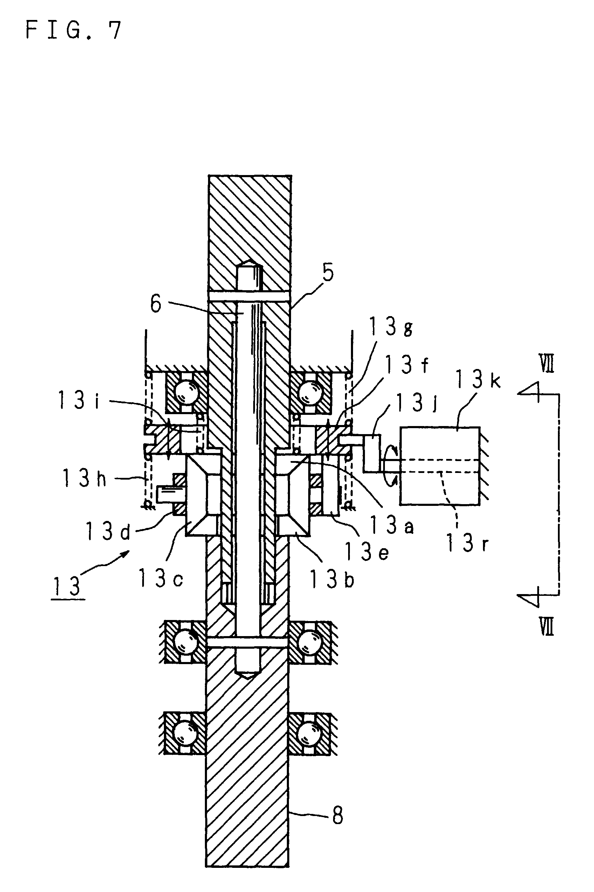

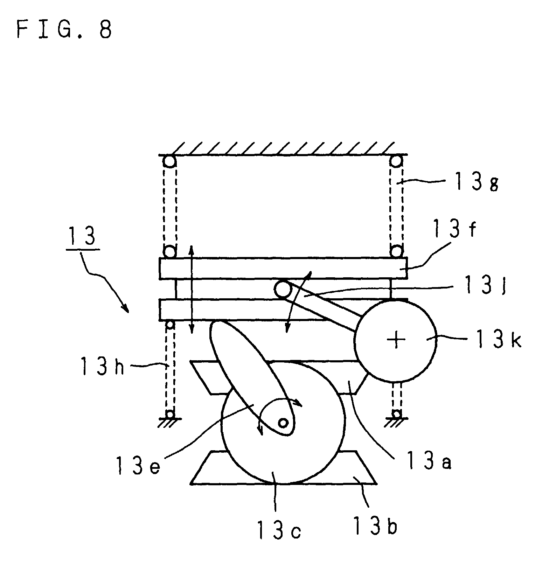

FIG. 7 is an explanatory drawing showing the operation of a steering apparatus according to embodiment 2 of the present invention, and FIG. 8 is a cross-sectional view taken along line VII-VII of FIG. 7, which shows a principle of embodiment 2;

In a torque sensor 13 of a steering apparatus according to embodiment 2, to the rotational shaft (axis of autorotation) of each of the third bevel gears 13c is attached an elliptical plate-shaped cam 13e on the outer side of the retained portion by the retainer 13d with its longitudinal direction coinciding with the radial direction of the rotation and its one end portion serving as the center of rotation. In other words, as compared with the cam 13e of embodiment 1 that is formed into a plate shape when viewed from the axis of autorotation, the above-mentioned cam 13e of embodiment 2 has an elliptical shape.

Moreover, the lower end face of the slider 13f is pressed by a second coil spring 13h secured inside the housing 12 while the first bevel gear 13a is pressed downwardly by a third coil spring 13i secured inside the housing 12, so as to allow the slider 13f to always slide in parallel with the connecting shaft 6; thus, it is possible to reduce backlash among the first, second, and third bevel gears 13a, 13b, and 13c. The other members that are the same as those of embodiment 1 are indicated by the same reference numerals and the description thereof is omitted.

As described above, in the construction of the steering apparatus of embodiment 2, the cam 13e has an elliptical plate shape, and the contact portion thereof against the slider 13f in the plane orthogonal to the rotational axis of the cam 13e has a cross-sectional shape that forms a portion of ellipse with its major axis direction coinciding with the rotational radial direction of the cam 13e. For this reason, the closer portion to the top of the cam 13e, the further in distance from the center of rotation, with the result that as the angle made by the lower end face of the slider 13f and the lengthwise direction of the cam 13e becomes longer, the cam 13e comes into contact with the slider 13f at a portion closer to the top thereof, thereby increasing the amount of movement of the slider 13f. Therefore, as compared with embodiment 1 that uses a cam 13e both of the end faces of which are formed into arc faces, the cam 13e of this type makes the output characteristic of the torque sensor 13 closer to the linear characteristic, thereby enabling torque measurements with high precision.

Here, the shape of the cam 13e may have a plate shape in which only the contact portion against the slider 13f forms a portion of ellipse with its major axis coinciding with the rotational radial direction of the cam 13e.

### Embodiment 3

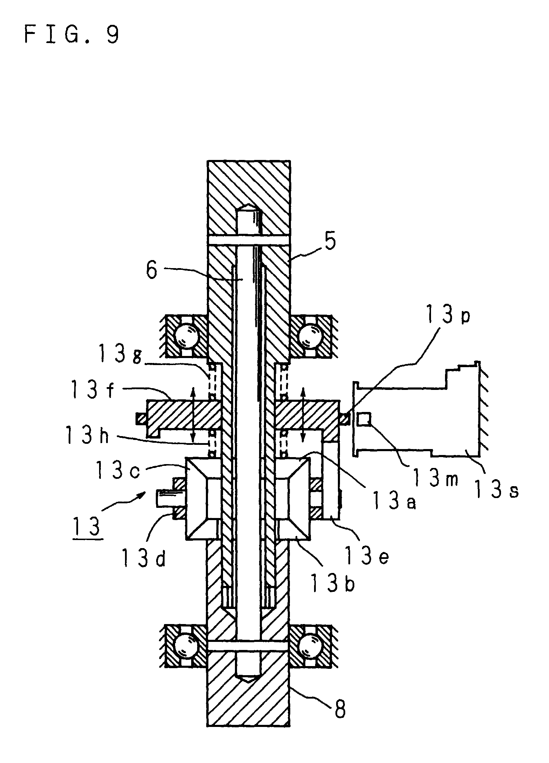

FIG. 9 is an explanatory drawing showing the operation of a steering apparatus according to embodiment 3 of the present invention. In the steering apparatus of embodiment 3, a small magnetic piece 13p made of a magnetic material is attached to the outer circumference of the slider 13f, and a magnetic reluctance element (MRE) 13m is placed at a position facing the magnetic piece 13p on a substrate 13s which has an electric circuit of the torque sensor 13 mounted thereon and which is secured to the housing 12.

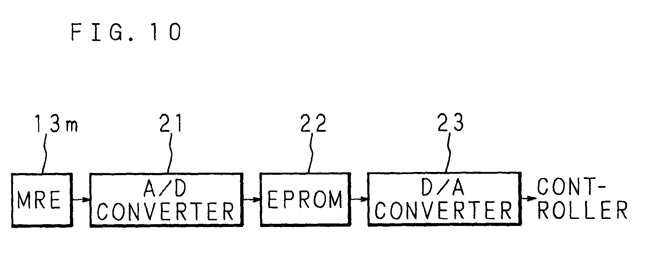

FIG. 10 is a block diagram showing a structural example of an electric circuit mounted on the substrate 13s of the torque sensor 13 shown in FIG. 9. This electric circuit is provided with an Analog/Digital (A/D) converter 21 which analog-to-digital converts the output voltage of the MRE 13m corresponding to a change in a magnetic field generated by a displacement in the magnetic piece 13p in response to a torque applied to the input shaft 5, an EPROM (Erasable and Programmable ROM) 22 which has a matrix construction so as to output a digital signal in accordance with a digital signal that has been converted by the A/D converter 21, and a Digital/Analog (D/A) converter 23 which digital-to-analog converts a digital signal outputted by the EPROM 22.

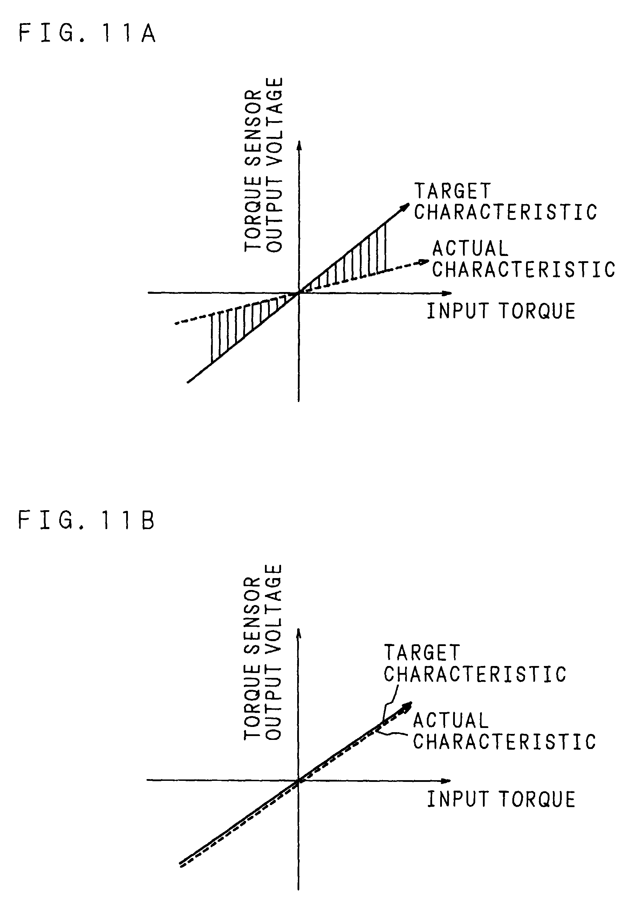

FIGS. 11A and 11B are graphs showing input-output characteristics of the torque sensor shown in FIG. 10. In response to a torque (input torque) applied to the input shaft 5, even when the characteristic of the measured signal (electric signal) of the torque sensor 13, which is supposed to be indicated by a target characteristic (solid line) as shown in FIG. 11A, is given by, for example, the characteristic of the output voltage of the MRE 13m as an actual characteristic (broken line), the EPROM 22 has such a matrix construction that a voltage value in accordance with the target characteristic is outputted in response to the output voltage value (actual characteristic) of the MRE 13m that has been A/D converted. In other words, the EPROM 22 is arranged at the time of assembling the torque sensor 13 so that by using the A/D converted output voltage value of the MRE 13m as an address, a voltage value corresponding to the target characteristic stored in the address is outputted. Therefore, the output voltage characteristic of the torque sensor 13 in response to the input torque is made approximately the same as the target characteristic as shown in FIG. 11B.

In the case when the input shaft 5 and output shaft 8 relatively rotate without a torsion generating in the connecting shaft 6, since there is no difference in rotation between the first and second bevel gears 13a and 13b, the third bevel gear 13c is not allowed to rotate, with the result that the input shaft 5, output shaft 8 and connecting shaft 6 are allowed to rotate integrally.

In contrast, in the case when the input shaft 5 and output shaft 8 relatively rotate with a torsion generating in the connecting shaft 6, a difference in rotational position occurs between the first and second bevel gears 13a and 13b. For this reason, the third bevel gear 13c autorotates by an amount corresponding to the torsion in the connecting shaft 6 so that it is allowed to revolve around the center axis of the connecting shaft 6 together with the retainer 13d. At this time, together with the third bevel gear 13c, the cam 13e secured to the rotational shaft thereof is also allowed to rotate, with the result that the slider 13f is allowed to slide in accordance with its amount of rotation. When the slider 13f slides, the magnetic piece 13p is also allowed to move, and the movement results in change in a magnetic field on the periphery of the MRE 13m, thereby causing the resistance of the MRE 13m to change. The change in the resistance of the MRE 13m is outputted as a change in the output voltage.

The voltage, outputted by the MRE 13m, is A/D converted by the A/D converter 21, and the converted digital signal is given to the EPROM 22 as an address. The EPROM 22 outputs a value stored at the given address. The value of the outputted digital signal is D/A converted by the D/A converter 23 so that it is outputted as an analog voltage signal and also as a measured signal of the torque sensor 13.

As described above, it becomes possible to easily carry out an assembling process for mechanical parts, a neutral point adjustment for the measured signal and a gain adjustment for the measured signal, and consequently to provide better yield for the product. Moreover, it becomes possible to reduce variations in individual characteristics, and consequently to provide an easier adjustment even in the case when a replacement of the sensor 13 is made due to a malfunction.

### Embodiment 4

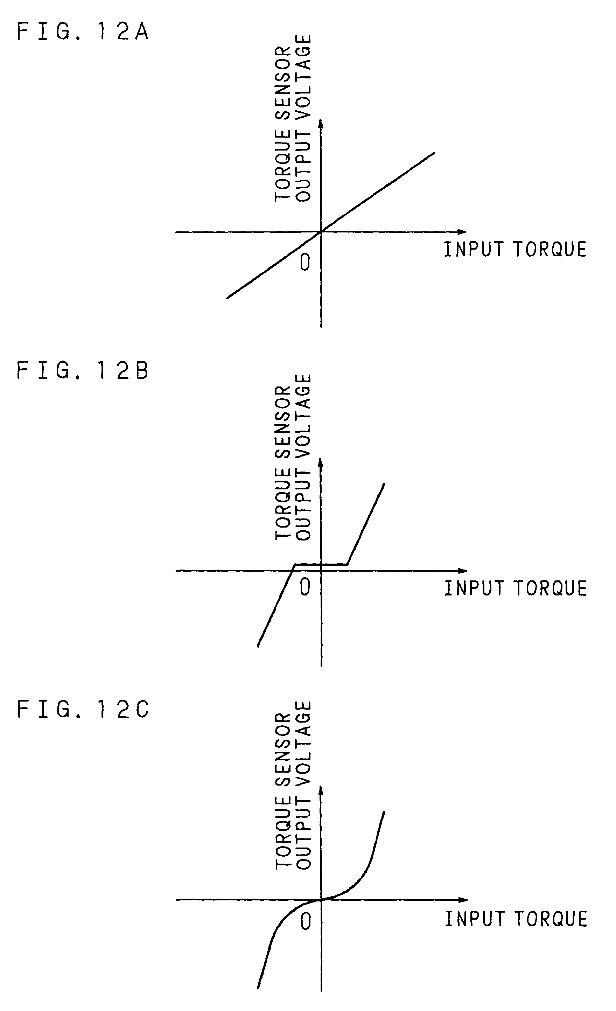

FIGS. 12A to 12C are graphs showing input-output characteristics of the torque sensor used in a steering apparatus according to embodiment 4 of the present invention, and also indicate a target characteristic for a measured signal of the torque sensor 13 in response to an input torque applied to the input shaft 5. This target characteristic is stored in the EPROM 22. The EPROM 22 has such a matrix construction that when the same torque as the output voltage characteristic of the MRE 13m is given, it outputs, for example, a voltage value as shown in FIG. 12A, FIG. 12B or FIG. 12C.

In the case of FIG. 12A, the torque sensor 13 outputs a measured signal that is proportional to the torque value, in the same manner as embodiment 3. In the case of FIG. 12B, it outputs a measured signal having a dead-zone band in the proximity of "0" of the torque value. Moreover, in the case of FIG. 12C, it outputs a measured signal that is non-linear to the torque value. The other arrangements and operations are the same as those explained in the torque sensor 13 and the steering apparatus of embodiment 3; therefore, the description thereof is omitted.

As described above, it becomes possible to easily carry out an assembling process for mechanical parts, a neutral point adjustment for the measured signal and a gain adjustment for the measured signal, and consequently to provide better yield for the product. Moreover, it becomes possible to reduce variations in individual characteristics, and consequently to provide an easier adjustment even in the case when a replacement of the sensor 13 is made due to a malfunction.

## Claims

1. A torque sensor (13) for measuring a torque applied to an input shaft (5) based on a helix angle which has been induced in a connecting shaft (6) coaxially connecting the input shaft (5) and an output shaft (8), characterized by including;
a first gear (13a) and a second gear (13a) respectively attached to the input and output shafts (5, 8);
a third gear (13c) being engaged with both the first and second gears (13a, 13b), and
a detector (13e, 13f, 13i, 13k, 13m, 13p) for detecting the amount of rotation of the third gear (13c),
wherein the torque is measured based upon the amount of rotation detected by the detector (13e, 13f, 13j, 13k, 13m, 13p).

2. The torque sensor (13) according to claim 1, wherein the detector (13e, 13f, 13j, 13k, 13m, 13p) having:
an eccentric member (13e) eccentrically provided on the rotational axis of the third gear (13c);
a moving member (13f, 13p) which moves along the shaft direction of the input and output shafts (5, 8) corresponding to the rotation of the eccentric member (13e) accompanied by the rotation of the third gear (13c); and
a generator (13k, 13m) for generating an electric signal corresponding to the amount of movement of the moving member (13f, 13p),
the torque being measured based upon the electric signal generated by the generator (13k, 13m).

3. The torque sensor (13) according to claim 1, wherein the detector (13e, 13f, 13j, 13k, 13m, 13p) having:
an eccentric member (13e) eccentrically provided on the rotational axis of the third gear (13c);
a moving member (13f, 13p) which moves along the shaft direction of the input and output shafts (5, 8) corresponding to the rotation of the eccentric member (13e) accompanied by the rotation of the third gear (13c);
a swinging member (13j) which swings in cooperation with movement of the moving member (13f, 13p); and
a generator (13k, 13m) for generating an electric signal corresponding to the amount of swinging movement of the swinging member (13j),
the torque being measured based upon the electric signal generated by the generator (13k, 13m).

4. The torque sensor (13) according to claim 1 to 3, wherein the first gear (13a) is provided movably along the input shaft (5), further comprising:
a spring (13h, 13i) for pressing the first gear (13a) toward the second gear (13h).

5. The torque sensor (13) according to claim 1 to 4, further comprising:
a memory (22) for correspondingly storing an electric signal generated by the generator (13k, 13m) and a predetermined electric signal to be outputted in accordance with the torque; and
an output device (23) for reading and outputting an electric signal, which is corresponding to the electric signal generated by the generator (13k, 13m), from the memory (22).

6. The torque sensor (13) according to claim 1 to 5, wherein a plurality of third gears (13c) are provided along the circumferential direction of the first and second gears (13a, 13b).

7. The torque sensor (13) according to claim 2 or 6, wherein the eccentric member (13e) has a shape elongated in the radial direction of the third gear (13c) with its one portion contacting with the moving member (13f, 13p), and a cross-sectional shape of the contacting portion in the plane orthogonal to the rotational axis of the third gear (13c) is a portion of ellipse which lies with its major axis oriented in the lengthwise direction.

8. A torque sensor (13) for generating an electric signal corresponding to a measured torque, characterized by including:
a memory (22) for correspondingly storing the electric signal and a predetermined electric signal which is to be outputted based on the torque; and
an output device (23) for reading and outputting an electric signal, which is corresponding to the electric signal in accordance with the torque, from the memory (22).

9. A steering apparatus for assisting steering based upon a steering torque being applied to a steering wheel (1), characterized by including:
an input shaft (5) connected to the steering wheel (1);
an output shaft (8) coaxially provided with the input shaft (5);
a connecting shaft (6) for connecting the input and output shafts (5, 8);
any one of the torque sensors (13) according to claims 1 to 20, the first and second gears (13a, 13b) thereof being attached to the input and output shafts (5, 8) respectively; and
an electric motor (14) for steering assistance which is driven based on a steering torque measured by the torque sensor (13).

10. A steering apparatus for assisting steering based upon a steering torque being applied to a steering wheel (1), characterized by including;
an input shaft (5) connected to the steering wheel;
an output shaft (8) coaxially provided with the input shaft (5);
a connecting shaft (6) for connecting the input and output shafts (5, 8);
a torque sensor (13) according to claim 8, the first and second gears (13a, 13b) thereof being attached to the input and output shafts (5, 8) respectively; and
an electric motor (14) for steering assistance which is driven based on a steering torque measured by the torque sensor (13).
